# EUROPÄISCHE PATENTSCHRIFT

(11) **EP 1 018 662 B1**
(45) Veröffentlichungstag und Bekanntmachung des Hinweises auf die Patenterteilung: **22.03.2006**
(21) Anmeldenummer: 99403103.7
(22) Anmeldetag: 09.12.1999
(51) Int. Cl.: G02B 6/44

(54) **Optisches Kabel**
Optical cable
Cable optique

(30) Priorität: 07.01.1999 DE 19900214
(43) Veröffentlichungstag der Anmeldung: 12.07.2000
(73) Patentinhaber: Draka Comteq B.V., 1021 JZ Amsterdam (NL)
(72) Erfinder: Nothofer, Klaus Dipl.-Ing., 40699 Erkrath (DE)
(74) Vertreter: Dohmen, Johannes Maria Gerardus

(56) Entgegenhaltungen:
- DE-A- 2 635 979
- GB-A- 2 184 563
- GB-A- 2 215 480
- US-A- 4 844 575
- US-A- 4 909 592
- US-A- 4 909 593
- US-A- 5 155 789
- US-A- 5 165 003
- US-A- 5 249 249
- US-A- 5 703 984

## Beschreibung

Die Erfindung betrifft ein optisches Kabel nach dem Oberbegriff des Anspruchs 1 sowie ein Verfahren zu seiner Herstellung.

Ein solches kabel ist aus der US 5, 249, 249 bekannt.

Es ist bekannt, Lichtwellenleiter mit einer zug- und druckfesten Kunststoffschicht zu versehen (Festader) und mehrere solcher Festadern miteinander oder um ein Zentralelement zu verseilen. Bei dieser Konstruktion ist jeder Lichtwellenleiter individuell geschützt.

Der Aufwand ist hierbei sehr hoch und deshalb ist ein so aufgebautes Kabel nur dann wirtschaftlich, wenn geringe Faserzahlen gefordert sind.

Es sind des weiteren optische Kabel bekannt, bei denen mehrere Lichtwellenleiter lose in einer Aderhülle angeordnet sind (Bündeladern) und mehrere solcher Bündeladern um ein Zentralelement verseilt sind. Die Lichtwellenleiter liegen mit einer gewissen Überlänge in der Aderhülle. Der Schutz der Fasern in der Aderhülle ist sehr gut, jedoch hat ein solches Kabel den Nachteil, daß die Raumausnutzung nicht befriedigend ist.

Ein weiteres bekanntes Kabel besteht aus mehreren Faserbündeln, die jeweils von einer Wendel umhüllt sind. Die Wendeln sind unterschiedlich eingefärbt. Mehrere solcher Faserbündel sind lose von einer Hülle umgeben. Dieser Aufbau wird im allgemeinen nur bei Kabeln mit im Zentrum des Kabels angeordneten Lichtwellenleitern gewählt. Ein solches Kabel gestattet hohe Faserzahlen (üblich sind etwa bis 100 Fasern) in einer Hülle und erfordert nur einen geringen Verkabelungsaufwand.

Auch bei diesem Kabel ist die Raumausnutzung nicht optimal. Darüber hinaus reagieren die Fasern leicht mit Dämpfungserhöhungen infolge von Einschnürungen durch die Wendeln. Die Identifizierung der Fasern ist oft wegen der großen Schlaglänge der Wendeln schwierig.

Bei einem weiteren bekannten Kabel sind eine Vielzahl von Lichtwellenleitern fest von einer Faserhülle umgeben und mehrere solcher Faserbündel miteinander oder um ein Zentralelement verseilt. Die so gebildete Kabelseele ist von einem Kabelmantel umgeben. Der Vorteil dieses Aufbaus liegt in einer sehr guten Raumausnutzung. Nachteilig ist, daß nur ein geringer mechanischer Schutz der Fasern vor radialen Druck vorhanden ist. Daher ist dieses Kabel sehr empfindlich in Bezug auf Dämpfungserhöhungen.

Der vorliegenden Erfindung liegt die Aufgabe zugrunde, ein optisches Kabel bereitzustellen, bei welchem die Raumausnutzung optimiert und die Querkräfte entkoppelt sind.

Diese Aufgabe wird durch die im Kennzeichen des Anspruchs 1 erfaßten Merkmale gelöst.

Neben den sich aus der Aufgabenstellung direkt ergebenden Vorteilen weist das erfindungsgemäße Kabel noch den Vorteil auf, daß es unempfindlich gegen Dämpfungserhöhungen ist. Das optische Kabel weist eine hohe Faserdichte bei relativ kleinem Außendurchmesser auf. Im Prinzip besteht die Erfindung darin, daß bei einem Kabel nach dem Bündeladerprinzip jeder Lichtwellenleiter durch ein aus einer Vielzahl von Lichtwellenleitern bestehendes Faserbündel ersetzt ist. Dadurch ergibt sich eine Faserzahl, die bei einem annähernd gleichen Außendurchmesser des Kabels, um nahezu eine Zehnerpotenz höher liegt als beim bekannten Bündeladerkabel. Die "Überlänge" der Fasern entsteht dadurch, daß die von einer Hülle umgebenen Faserbündel lose in einer mechanisch stabilen Hülle angeordnet sind und sich bei einer Biegung des Kabels innerhalb der Hülle verlagern können. Darüber hinaus entsteht eine "Überlänge" durch die Verseilung der Verseilelemente. Die Faserbündel sind in der mechanisch stabilen Hülle vor Querdruckkräffen geschützt.

Die Erfindung ist anhand des in der Figur schematisch dargestellten Ausführungsbeispiele näher erläutert.

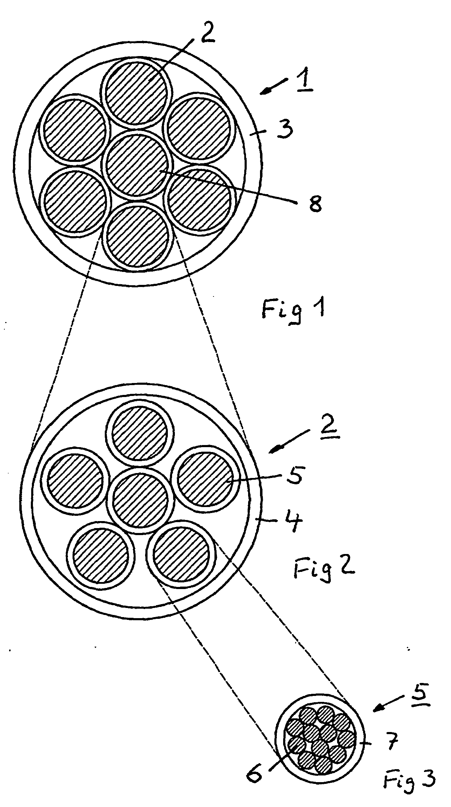

In Figur 1 ist ein Schnitt durch ein Kabel 1 gemäß der Lehre der Erfindung dargestellt.

Das Kabel 1 besteht aus einem Zentralelement 8, z. B. aus glasfaserverstärktem Kunststoff, Polyaramid, Metall oder ähnlichen zugfesten Werkstoffen, um welches mehrere Verseilelemente 2 verseilt sind. Die Verseilelemente 2 können mit wechselnder Schlagrichtung (SZ-Verseilung) verseilt sein. Als äußerer Schutz dient ein Außenmantel 3, z. B. aus Polyethylen.

In Figur 2 ist ein Verseilelement 2 im Schnitt dargestellt. Das Verseilelement 2 besteht aus mehreren Faserbündeln 5, die entweder parallel zueinander verlaufend oder wellenförmig innerhalb einer Hülle 4 lose angeordnet sind. Die Hülle besteht aus einem harten Werkstoff, welcher der Hülle 4 eine hohe Querdruckstabilität verleiht. Bevorzugte Werkstoffe für die Hülle 4 sind Hartpolyethylen, Polypropylen, Polyester etc.. Aber auch ein Röhrchen aus Metall ist als Hülle 4 geeignet. Durch die lose Anordnung der Faserbündel 5 in der Hülle 4 ist sichergestellt, daß die Faserbündel 5 sich bei einer Biegung des Kabels 1 innerhalb der Hülle 4 gegeneinander verschieben können. Dadurch ist sichergestellt, daß die einzelnen Fasern innerhalb der Faserbündel 5 nicht über das zulässige Maß gekrümmt werden. Eine nennenswerte Dämpfung ist somit nicht zu erwarten.

Figur 3 zeigt einen Schnitt durch ein Faserbündel 5. Jedes Faserbündel 5 besteht aus einer Hülle 7, innerhalb derer eine Vielzahl von Fasern bzw. Lichtwellenleitern 6 angeordnet sind. Die Hülle 7 umfaßt das aus den Fasern bzw. Lichtwellenleitern 6 bestehende Faserbündel eng, so daß sich bei einem vorgegebenen Innendurchmesser der Hülle 7 ein Maximum an Fasern 6 in der Hülle 7 unterbringen läßt. Die Wanddicke der Hülle 7 ist sehr gering und beträgt bei z. B. zwölf Fasern 6 weniger als 0,25 mm. Als Werkstoffe für die Hülle 7 eignen sich weiche Werkstoffe, d. h. solche, die sich leicht entfernen lassen, wenn ein Zugriff zu den Fasern bzw. Lichtwellenleitern 6 erforderlich ist. Bevorzugt werden Weichpolyethylen, Polyesteramidcopolymer, weiches Ethylen-Propylen-Copolymer, Styrolbutadienkautschuk etc..

Ein Kabel gemäß der Lehre der Erfindung kann beispielsweise folgende Abmessungen aufweisen:

| | |
|---|---|
| Außendurchmesser der Faser bzw. des Lichtwellenleiters | 0,25 mm |
| Wanddicke der Hülle 7 | 0,25 mm |
| Bei zwölf Fasern 6 in engster Packung ergibt sich somit ein Außendurchmesser des Faserbündels 5 von | 1,5 mm |
| Wanddicke der Hülle 4 (bei Kunststoff) | 0,6 mm |
| Bei sechs Faserbündeln 5, die lose in der Hülle 4 angeordnet sind, ergibt sich beispielsweise ein Außendurchmesser des Verseilelements 2 von ca. | 6,2 mm |
| Wanddicke des Mantels 3 | 1,5 mm |
| Bei sechs Verseilelementen 2 und einem Zentralelement 8 mit etwa gleichem Durchmesser ergibt sich ein Außendurchmesser für das erfindungsgemäße Kabel von ca. | 21,5 mm |
| Bei einer Faserzahl von 432 ergibt sich somit ein Außendurchmesser von ca. | 21,5 mm. |

Bei der Herstellung eines Kabels nach der Lehre der Erfindung werden in einem ersten Arbeitsschritt beispielsweise 12 Fasern von einem Faservorrat, z. B. Spulen, abgezogen, in einer Düse gebündelt und mittels eines Extruders bzw. eines Bandierers mit einer dünnwandigen Hülle umgeben. Im selben Arbeitsgang oder in einem nächsten Arbeitsgang werden 6 dieser Faserbündel einem Extruder zugeführt und dort von einer Hülle aus hartem Kunststoff umgeben.

Sechs von diesen Verseilelementen werden um ein Zentralelement herumgeseilt und im selben oder einem folgenden Arbeitsgang mit einem Außenmantel versehen.

Die Faserbündel und/oder die Verseilelemente können mit Petroleumjelly gefüllt werden. Die Hüllen 7 und die Hüllen 4 können zur Verbesserung der Unterscheidung ebenso wie die Fasern 6 unterschiedlich eingefärbt werden.

In die in dem Kabel 1 durch die Verseilelemente 2 gebildete Zwickel können zusätzlich noch Verseileinheiten kleineren Durchmessers untergebracht werden. So ist es denkbar, daß in die sechs Zwickel Faserbündeln 5 eingelegt werden, wodurch sich die Faserzahl um 72 erhöht.

## Patentansprüche

1. Optisches Kabel (1) mit einer aus einer Vielzahl von Verseilelementen (2) bestehenden Kabelseele und einem die Kabelseele umhüllenden Außenmantel (3), die Verseilelemente (2) weisen eine Vielzahl von in einer ersten Hülle (4) angeordneten Bündeln (5) auf und die Bündel (5) bestehen aus einer Vielzahl von parallel zueinander verlaufenden unverseilten Lichtwellenleitern (6), die von einer dünnwandigen zweiten Hülle (7) umgeben sind, wobei die Bündel (5) Faserbündel sind, die in erster Hülle (4) lose angeordnet sind,
**dadurch gekennzeichnet, daß** die zweite Hülle (7) einen kreisförmigen Querschnitt aufweist und das aus einzelnen Lichtwellen leitern (6) bestehende Bündel (5) so eng umfaßt, dass sich bei einem vorgegebenen seinen durch masser der zweiten Hülle (7) ein Maximun an Lichtwellenleitern (6) in der zweiten Hülle (7) unterbringen laßt.

2. Optisches Kabel nach Anspruch 1, **dadurch gekennzeichnet, daß** die Wanddicke der zweiten Hülle (7) höchstens 0,25 mm beträgt.

3. Optisches Kabel nach Anspruch 1 oder 2, **dadurch gekennzeichnet, daß** die erste Hülle (4) aus einem mechanisch stabilen Werkstoff besteht.

4. Optisches Kabel nach Ansprch 3, **dadurch gekennzeichnet, daß** die erste Hülle (4) aus einem dünnwandigen Metallrohr besteht.

5. Optisches Kabel nach Anspruch 3, **dadurch gekennzeichnet, daß** die erste Hülle (4) aus einem querdruckstabilen Kunststoffrohr auf der Basis von Hartpolyethylen oder Polypropylen besteht.

6. Optisches Kabel nach einem der Ansprüche 1 bis 5, **dadurch gekennzeichnet, daß** die Verseilelemente (2) um ein Zentralelement (8) herum verseilt sind.

7. Optisches Kabel nach einem der Ansprüche 1 bis 6, **dadurch gekennzeichnet, daß** die Bündel (5) mit einem eine Längswasserwanderung verhindernden Material, wie zum Beispiel Petroleumjelly, gefüllt sind.

8. Optisches Kabel nach einem der Ansprüche 1 bis 7, **dadurch gekennzeichnet, daß** die Verseilelemente (2) mit einem eine Längswasserwanderung verhindernden Material gefüllt sind.

9. Optisches Kabel nach einem oder mehreren der Ansprüche 1 bis 8, **dadurch gekennzeichnet, daß** die zweite Hülle (7) aus einem weichen, leicht einreißbaren Kunststoff wie beispielsweise Weichpolyethylen besteht.

10. Verfahren der Herstellung eines optischen Kabels nach einem der Ansprüchel bis 9, wobei die von Vorratsspulen abgezogenen Lichtwellenleiter (6) gebündelt werden und in einem ersten Extruder mit der zweiten Hülle (7) aus Kunststoff versehen werden und wobei die so hergestellten Bündel (5) einer Ummantelungsanlage parallel zueinander verlaufend zugeführt und dort von der ersten Hülle (4) lose umgeben werden, die so hergestellten Elemente miteinander bzw. um ein Zentralelement (8) verseilt werden, und abschließend der Außenmantel (3) aufgebracht wird.

11. Verfahren nach Anspruch 10, **dadurch gekennzeichnet, daß** die Bündel mit einer Hülle aus einem harten Kunststoff versehen werden.

12. Verfahren nach Anspruch 10, **dadurch gekennzeichnet, daß** die Bündel mit einem Metallrohr umgeben werden.

## Claims

1. Optical cable (1) having a cable core consisting of a multiplicity of stranded elements (2), and having an outer jacket (3) enveloping the cable core, which stranded elements (2) have, arranged in a first sheath (4), a multiplicity of bundles (5), the bundles (5) consisting of a multiplicity of non-stranded light waveguides (6), running parallel to one another, which are enclosed by a thin-walled second sheath (7), the bundles (5) being fibre bundles that are loosely arranged in the first sheath (4), **characterised in that** the second sheath (7) has a circular cross-section and surrounds the bundle (5), consisting of individual light waveguides (6), so tightly that when the second sheath (7) has a prespecified internal diameter a maximum number of light waveguides (6) are enabled to be accommodated in the second sheath (7).

2. Optical cable according to claim 1, **characterised in that** the wall thickness of the second sheath (7) is at most 0.25 mm.

3. Optical cable according to claim 1 or 2, **characterised in that** the first sheath (4) consists of a mechanically stable material.

4. Optical cable according to claim 3, **characterised in that** the first sheath (4) consists of a thin-walled metal tube.

5. Optical cable according to claim 3, **characterised in that** the first sheath (4) consists of a plastics tube which is stable to transverse forces and based on high-density polyethylene or on polypropylene.

6. Optical cable according to one of claims 1 to 5, **characterised in that** the stranded elements (2) are stranded around a central element (8).

7. Optical cable according to one of claims 1 to 6, **characterised in that** the bundles (5) are filled with a material preventing lengthwise water migration, for example petroleum jelly.

8. Optical cable according to one of claims 1 to 7, **characterised in that** the stranded elements (2) are filled with a material preventing lengthwise water migration.

9. Optical cable according to one or more of claims 1 to 8, **characterised in that** the second sheath (7) consists of a soft, readily tearable plastics material, for example low-density polyethylene.

10. Method of producing an optical cable according to one of claims 1 to 9, wherein the light waveguides (6), having been drawn off storage coils, are bundled and are provided in a first extruder with the second sheath (7) of plastics material, and wherein the bundles (5) thereby produced are fed, running parallel to one another, to a covering installation and loosely enclosed there by the first sheath (4), the elements thereby produced are stranded with one another or stranded around a central element (8) and finally the outer jacket (3) is put on.

11. Method according to claim 10, **characterised in that** the bundles are provided with a sheath made of a hard plastics material.

12. Method according to claim 10, **characterised in that** the bundles are enclosed by a metal tube.

## Revendications

1. Câble optique (1) muni d'une âme de câble se composant d'une pluralité d'éléments toronnés (2) et d'une gaine (3) enveloppant l'âme de câble, les éléments toronnés (2) présentent une pluralité de faisceaux (5) disposés dans une première enveloppe (4) et les faisceaux (5) sont constitués d'une pluralité de fibres optiques (6) non toronnées s'étendant parallèlement les unes aux autres, qui sont entourées par une seconde enveloppe à parois minces (7), dans lequel les faisceaux (5) sont des faisceaux de fibres optiques, qui sont disposés de façon lâche dans la première enveloppe (4),
**caractérisé en ce que** la seconde enveloppe (7) présente une coupe transversale circulaire et entoure le faisceau (5) constitué de fibres optiques individuelles (6) de façon si étroite qu'un maximum de fibres optiques (6) peut être inséré dans la seconde enveloppe (7) dans le cas d'un diamètre interne prédéterminé de la seconde enveloppe (7).

2. Câble optique selon la revendication 1, **caractérisé en ce que** l'épaisseur de paroi de la seconde enveloppe (7) atteint au plus 0,25 mm.

3. Câble optique selon la revendication 1 ou 2, **caractérisé en ce que** la première enveloppe (4) se compose d'un matériau mécaniquement stable.

4. Câble optique selon la revendication 3, **caractérisé en ce que** la première enveloppe (4) se compose d'un tube métallique à paroi mince.

5. Câble optique selon la revendication 3, **caractérisé en ce que** la première enveloppe (4) se compose d'un tube en plastique stable à la pression transversale sur la base de polyéthylène dur ou de polypropylène.

6. Câble optique selon l'une des revendications 1 à 5, **caractérisé en ce que** les éléments toronnés (2) sont toronnés autour d'un élément central (8).

7. Câble optique selon l'une des revendications 1 à 6, **caractérisé en ce que** les faisceaux (5) sont remplis d'un matériau empêchant une migration de l'eau longitudinale, comme par exemple du pétrolatum.

8. Câble optique selon l'une des revendications 1 à 7, **caractérisé en ce que** les éléments toronnés (2) sont remplis d'un matériau empêchant une migration de l'eau longitudinale.

9. Câble optique selon l'une ou plusieurs des revendications 1 à 8, **caractérisé en ce que** la seconde enveloppe (7) se compose d'un matériau synthétique facilement déchirable souple comme par exemple du polyéthylène tendre.

10. Procédé de fabrication d'un câble optique selon l'une des revendications 1 à 9, dans lequel les fibres optiques (6) tirées depuis des bobines débitrice sont liées et sont munies de la seconde enveloppe (7) en matière plastique dans une première extrudeuse et dans lequel les faisceaux ainsi réalisés (5) sont délivrés s'étendant parallèlement les uns aux autres à une installation d'enrobage et là sont entourés de façon lâche par la première enveloppe (4), les éléments ainsi fabriqués sont toronnés les uns avec les autres ou autour d'un élément central (8), et enfin la gaine externe (3) est appliquée.

11. Procédé selon la revendication 10, **caractérisé en ce que** les faisceaux sont munis d'une enveloppe en matière plastique dure.

12. Procédé selon la revendication 10, **caractérisé en ce que** les faisceaux sont entourés par un tube métallique.
